# EUROPÄISCHE PATENTANMELDUNG

(11) **EP 3 318 937 A1**
(43) Veröffentlichungstag der Anmeldung: **09.05.2018**
(21) Anmeldenummer: 16196992.8
(22) Anmeldetag: 03.11.2016
(51) Int. Cl.: G05B 19/05

(54) **AUTOMATISIERUNGSSYSTEM UND VERFAHREN ZUM BETRIEB**

(71) Anmelder: Siemens Aktiengesellschaft, 80333 München (DE)
(72) Erfinder: Braun, Ulrich, 90431 Nürnberg (DE)

(57) **Zusammenfassung**

Die Erfindung betrifft Automatisierungssystem (1) mit mehreren Automatisierungseinheiten (A,B,C) mit jeweils einem Steuerprogramm (A1,B1,C1) einer Mehrzahl von Schrittketten (x,y,z) zur Ablaufsteuerung einer Produktionsanlage (20), wobei die Schrittketten (x,y,z) in den jeweiligen Steuerprogrammen (A1,B1,C1) ablaufen, wobei eine Schrittkette (x,y,z) mehrere Schritte (Sᵢ) und mehrere Ereignispunkte (E_{K}) umfasst, wobei ein Schrittkettenkoordinator (M), welcher eine Liste (10) mit mehreren Kennungen (K) aufweist, wobei den Kennungen (K) eine Synchronisationsinformation (12) zugeordnet ist, die Kennung (K) beschreibt dabei eine Identität eines Ereignispunktes (Eₓ) einer Schrittkette (x,y,z) zu einer zugehörigen Automatisierungseinheit (A,B,C), dabei ist der Schrittkettenkoordinator (M) mit einer Koordinator-Schnittstelle (MS) ausgestattet und die Automatisierungseinheiten (A,B,C) umfassen eine Schrittketten-Schnittstelle (SS1,SS2,SS3) über die die Synchronisationsinformation (12) ausgetauscht wird, die Automatisierungseinheiten (A,B,C) sind dabei derart ausgestaltet, dass das Erreichen eines Ereignispunktes (E_{K}) in einer Schrittkette (x,y,z) dem Schrittkettenkoordinator (M) durch Absenden der Kennungen (K) mitgeteilt wird, wobei der Schrittkettenkoordinator (M) ausgestaltet ist anhand der Kennungen (K) die zugehörige Synchronisationsinformation (12) an die Automatisierungseinheiten (A,B,C) auszugeben.

## Beschreibung

Die Erfindung betrifft ein Automatisierungssystem mit mehreren Automatisierungseinheiten mit jeweils einem Steuerungsprogramm, einer Mehrzahl von Schrittketten zur Ablaufsteuerung einer Produktionsanlage, wobei die Schrittketten in den jeweiligen Steuerprogrammen ablaufen, wobei eine Schrittkette mehrere Schritte und mehrere Ereignispunkte umfasst.

Des Weiteren betrifft die Erfindung ein Verfahren zum Betrieb eines Automatisierungssystems mit mehreren Automatisierungseinheiten in denen jeweils ein Steuerprogramm mit zumindest einer Schrittkette abläuft, welche zur Ablaufsteuerung einer Produktionsanlage schrittweise durchlaufen wird, eine Schrittkette umfasst dabei mehrere Schritte und mehrere Ereignispunkte.

Das Automatisierungssystem im Sinne der Erfindung repräsentiert eine Ablaufsteuerung zur Steuerung einer Produktionsanlage. Ablaufsteuerungen ermöglichen eine Zeit- oder Ereignisdiskrete Abarbeitung sequentieller und/oder paralleler Abläufe. Sie dienen einer Koordination von verschiedenen kontinuierlichen Funktionen sowie zur Steuerung von komplexen Prozessabläufen. Abhängig von definierten Zuständen oder Ereignissen werden Betriebs- und Zustandswechsel in den vorhandenen Ablaufsteuerungen erzeugt und so ein gewünschtes Ablaufverhalten realisiert. Dieses wird durch eine oder mehrere Schrittketten implementiert.

Durch das Dokument TIA Ausbildungsunterlage, Ausgabestand: 09/2011, Modul P01_07, PCS 7 für Hochschulen, ist eine Schrittkettenprogrammierung für Automatisierungssysteme bekannt. Da in Produktionsprozessen für eine Produktionsanlage in der Regel mehrere Automatisierungseinheiten bzw. Maschinen einer Linie koordiniert werden müssen, ist es bei dem bekannten Systemen und Verfahren von Nachteil, eine Koordination von unabhängigen Maschinen/Teilprozessen zu realisieren, da diese Maschinen häufig von OEMs (Original Equipment Manufactors) als eine komplette Einheit an einen Endkunden geliefert werden, inklusive der notwendigen Steuerungslogik.

Zur Integration stellt der Maschinenlieferant eine von ihm definierte Schnittstelle zur Verfügung, die ein Systemintegrator im überlagerten System zur Koordinierung zum Starten/Stoppen nutzen kann. Bei der Koordination/Synchronisation mit anderen Einheiten muss ein Projektentwickler Signale anderer Maschinen auswerten und zur Verfügung stellen.

Es ist Aufgabe der vorliegenden Erfindung die Koordination/Synchronisation zwischen den Automatisierungseinheiten für einen Systemintegrator bzw. Projektentwickler zu vereinfachen.

Die Aufgabe wird für das eingangs genannte Automatisierungssystem durch einen Schrittkettenkoordinator gelöst, wobei der Schrittkettenkoordinator eine Liste mit mehreren Kennungen aufweist, wobei den Kennungen eine Synchronisationsinformation zugeordnet ist, die Kennung beschreibt dabei eine Identität eines Ereignispunktes einer Schrittkette zu einer zugehörigen Automatisierungseinheit, dabei ist der Schrittkettenkoordinator mit einer Koordinator-Schnittstelle ausgestattet und die Automatisierungseinheiten umfassen eine Schrittketten-Schnittstelle über die die Synchronisationsinformation ausgetauscht wird, die Automatisierungseinheiten sind dabei derart ausgestaltet, dass das Erreichen eines Ereignispunktes in einer Schrittkette dem Schrittkettenkoordinator durch Absenden der Kennung mitgeteilt wird, wobei der Schrittkettenkoordinator ausgestaltet ist, anhand der Kennung, die zugehörigen Synchronisationsinformationen an die Automatisierungseinheiten auszugeben. Von Vorteil ist es bei dieser Lösung, dass die Automatisierungseinheiten nicht direkt miteinander kommunizieren müssen und dadurch muss ein Projektentwickler auch nicht die Signale anderer Maschinen auswerten und zur Verfügung stellen bzw. verknüpfen. Bestimmte Regeln, wie die Automatisierungseinheiten zu koordinieren bzw. zu synchronisieren sind, sind nun in einem zentralen Schrittkettenkoordinator hinterlegt. Dem Schrittkettenkoordinator sind Synchronisationspunkte bzw. die Ereignispunkte der zu koordinierten Schrittketten der zugehörigen Automatisierungseinheiten bekannt. Im Schrittkettenkoordinator wird nur auf diesem bekannten Wissen mit zugehörigen Synchronisationsinformationen das Zusammenspiel der Automatisierungseinheiten definiert. Das Zusammenspiel im Schrittkettenkoordinator ist aus Sicht einer Automatisierungseinheit folgendermaßen zu erklären, die jeweilige Automatisierungseinheit mit ihrer jeweiligen Schrittkette meldet ein Erreichen eines Ereignispunktes bzw. eines Synchronisationspunktes. Ist die im Schrittkettenkoordinator zu verwaltende Synchronisation abgeschlossen, teilt der Schrittkettenkoordinator dies den anderen beteiligten Automatisierungseinheiten mit.

In einer vorteilhaften Ausgestaltung weist das Automatisierungssystem ein Bearbeitungsmittel auf, welches dazu ausgebildet ist, die Schrittketten mit ihren Schritten und ihren Ereignispunkten in Zuordnung zu einer Automatisierungseinheit darzustellen, weiterhin ist das Bearbeitungsmittel dazu ausgestaltet, einem Projektentwickler es zu ermöglichen, zwischen einer ersten Schrittkette und einer zweiten Schrittkette eine Verknüpfung zwischen den Ereignispunkten zu erstellen, wobei das Bearbeitungsmittel weiterhin dazu ausgestaltet ist, es dem Projektentwickler zu ermöglichen der Verknüpfung die zugehörigen Synchronisationsinformation mit der Kennung aus einer vorgegebenen Menge von Anwendungsfällen zuzuordnen, wobei die Menge folgende Fälle umfasst: Starten einer Schrittkette, verzögertes Starten einer Schrittkette, warten auf eine Synchronisation, verzögertes Synchronisieren, warten auf Beendigung. Mit dieser Möglichkeit beispielsweise einem Editor, in welchem zwei Schrittketten eine von einer ersten Automatisierungseinheit und eine von einer zweiten Automatisierungseinheit dargestellt werden, kann der Projektentwickler in dem Editor zwischen zwei Ereignispunkten eine Linie ziehen und so die Verknüpfung erstellen. Der Verknüpfung fügt er dann noch durch einen beispielsweise weiteren Menüpunkt in dem Editor eine Synchronisationsinformation hinzu.

Weiterhin ist es von Vorteil, dass das Bearbeitungsmittel dazu ausgestaltet ist, die Verknüpfung mit der zugehörigen Synchronisationsinformation mit der Kennung in die Liste des Schrittkettenkoordinators zu laden.

Ist das Bearbeitungsmittel weiterhin dazu ausgestaltet die Schrittketten mit ihren Schritten und ihren Ereignispunkten von den Automatisierungseinheiten zu importieren, so ist es für einen Projektentwickler weiter von Vorteil, weil seine Arbeit erleichtert wird und die Schrittketten mit den zugehörigen Automatisierungseinheiten zur Auswahl am Bildschirm dargestellt werden. Demnach bringt jede Automatisierungseinheit mit ihren zugeordneten Schrittketten ihre eigenen Synchronisationspunkte mit. Diese werden dann zur weiteren Bearbeitung in einem Editor dargestellt.

Auch wird die eingangs genannte Aufgabe durch ein Verfahren zum Betrieb eines Automatisierungssystems gelöst. Das Automatisierungssystem mit mehreren Automatisierungseinheiten in denen jeweils ein Steuerprogramm mit zumindest einer Schrittkette abläuft, wobei die Schrittkette zur Steuerung einer Produktionsanlage schrittweise durchlaufen wird, und eine Schrittkette dabei mehrere Schritte und mehrere Ereignispunkte umfasst, wird einem verfahrensgemäß mit Schrittkettenkoordinator wie folgt betrieben. Der Schrittkettenkoordinator weist eine Liste mit mehreren Kennungen auf, wobei den Kennungen eine Synchronisationsinformation zugeordnet ist, die Kennung beschreibt dabei eine Identität eines Ereignispunktes einer Schrittkette zu einer zugehörigen Automatisierungseinheit, dabei ist der Schrittkettenkoordinator mit einer Koordinator-Schnittstelle ausgestattet, und die Automatisierungseinheiten umfassen eine Schrittketten-Schnittstelle über die die Synchronisationsinformation ausgetauscht wird, die Automatisierungseinheiten werden dabei derart betrieben, dass das Erreichen eines Ereignispunktes in einer Schrittkette dem Schrittkettenkoordinator durch Absenden der zugehörigen Kennung mitgeteilt wird, wobei in dem Schrittkettenkoordinator anhand der Kennung eine zugehörige Synchronisationsinformation gesucht wird und an die Automatisierungseinheit ausgegeben wird.

Zusammenfassend kann die erfindungsgemäße Lösung wie folgt dargestellt werden. In Produktionsprozessen müssen mehrere Maschinen einer Linie koordiniert werden. Eine Maschine kann hierbei als Ort betrachtet werden, in dem ein Teilschritt eines beispielsweisen Batchrezeptes abgearbeitet wird. Zur Synchronisation stehen nach dem bisherigen Stand der Technik im Prinzip zwei Verfahren zur Verfügung:
a) Über definierte Schnittstellen kann ein Projektentwickler aufwändig eine Synchronisation ausprogrammieren,
b) mittels eines Batchsystems (z.B. Simatic Batch) können die Maschinen entsprechend gesteuert und synchronisiert werden.

Dies kann auch unter Einbezug von Simatic IT geschehen, in dem MES-Sync Request verwendet werden, die dem MES melden, an welcher Stelle sich das Batchrezept befindet. Daraufhin können weitere Aktionen gestartet werden. Alle bekannten Verfahren sind sogenannte Top-Down Ansätze, d.h. das Prozesswissen liegt im überlagerten System. Das der Erfindung zugrundeliegende Automatisierungssystem und Verfahren entspricht einem Button-Up-Ansatz, d.h. derjenige, der eine Batchsequenz festlegt, integriert an bestimmten Stellen Ereignispunkte. Diese können dann über den Schrittkettenkoordinator synchronisiert werden. Auf diese Weise ist es möglich, die in den Automatisierungseinheiten, beispielsweise von einem OEM Zulieferer verwendeten Schrittketten nicht offenlegen zu müssen, dies ist ein Vorteil für die OEM Zulieferer. Im Schrittkettenkoordinator ist dann definiert, welche Synchronisationspunkten bzw. Ereignispunkte miteinander synchronisiert werden (z.B. synchroner Start, verzögerter Start, synchrones Warten, verzögerte Synchronisation, warten auf Ende).

Ein Ausführungsbeispiel erläutert weiterhin den Erfindungsgedanken. Es zeigt:
- FIG 1: ein Übersichtsbild eines Automatisierungssystems mit Automatisierungseinheiten,
- FIG 2: ein Beispiel, wie Schrittketten unterschiedlicher Automatisierungseinheiten miteinander verknüpft sein können,
- FIG 3: ein Kommunikationsbeispiel zwischen den Automatisierungseinheiten und dem Schrittkettenkoordinator für einen synchronen Start,
- FIG 4: ein weiteres Kommunikationsbeispiel der Automatisierungseinheiten mit den Schrittkettenkoordinator für ein synchrones Warten, und
- FIG 5: das aus der FIG 1 bekannte Automatisierungssystem mit der Erweiterung eines Bearbeitungsmittels an dem ein Projektentwickler die Verknüpfung zwischen den Schrittketten vornehmen kann.

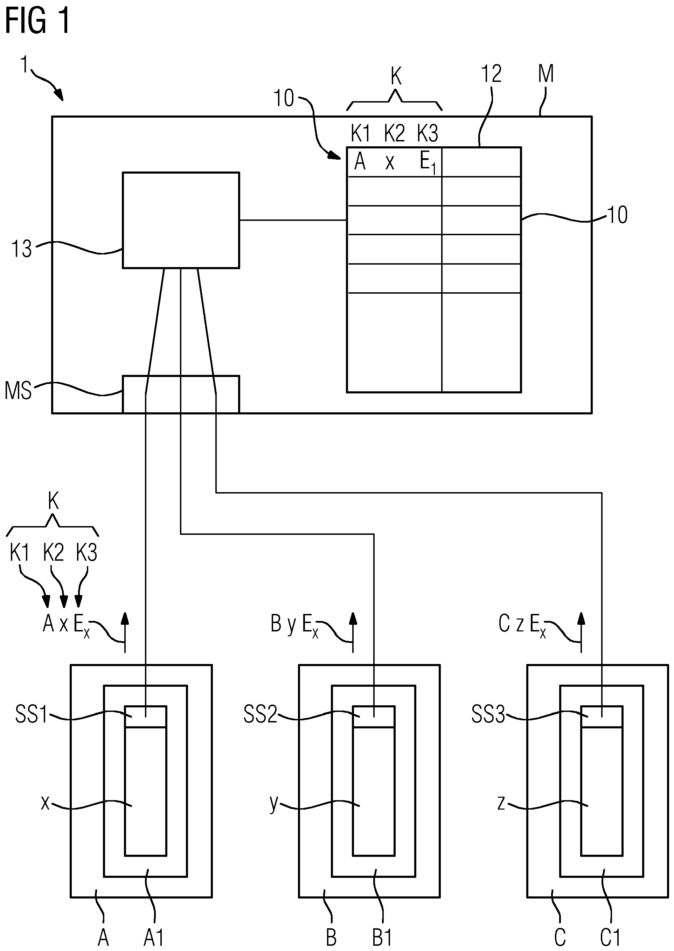

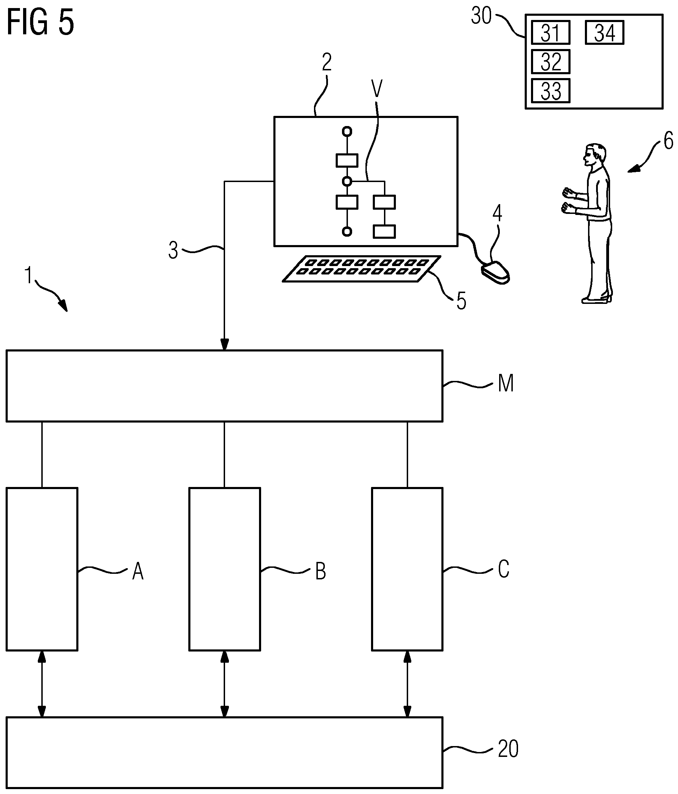

Gemäß der FIG 1 ist ein Automatisierungssystem 1 mit mehreren Automatisierungseinheiten A,B,C mit jeweils einem Steuerprogramm A1,B1,C1 einer Produktionsanlage 20 (siehe FIG 5) dargestellt. Eine erste Automatisierungseinheit A weist ein erstes Steuerprogramm A1 mit einer ersten Schrittkette x auf, eine zweite Automatisierungseinheit B weist ein zweites Steuerprogramm B1 mit einer zweiten Schrittkette y auf, eine dritte Automatisierungseinheit C weist ein drittes Steuerprogramm C1 mit einer dritten Schrittkette z auf. Die Automatisierungseinheiten A,B,C stehen beispielsweise über einen Feldbus mit einem Schrittkettenkoordinator M zum Datenaustausch in Verbindung.

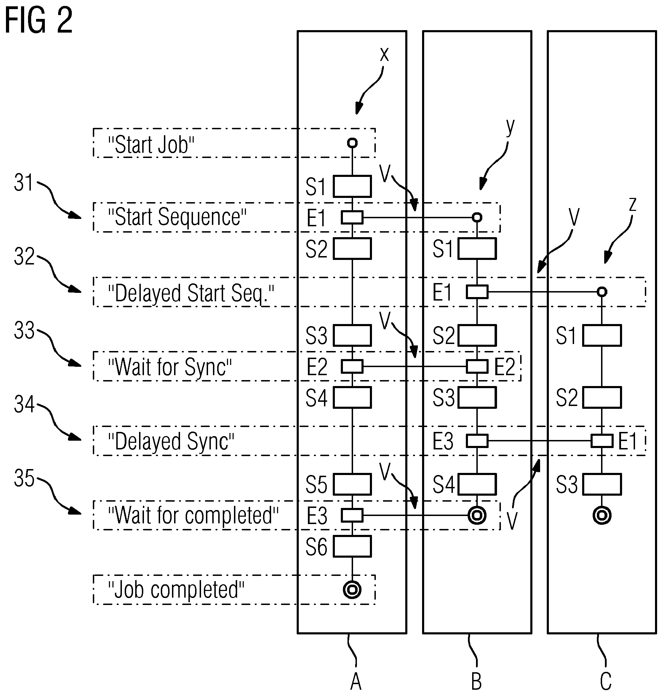

Eine Schrittkette x,y,z kann mehrere Schritte Sᵢ und mehrere Ereignispunkte E_{K} umfassen (siehe FIG 2). i = [1...n] und K = [1...n]. Der Schrittkettenkoordinator M weist eine Liste 10 mit mehreren Kennungen K auf, den Kennungen K sind Synchronisationsinformationen 12 zugeordnet. Die Kennung K beschreibt dabei eine Identität eines Ereignispunktes E_{K} einer Schrittkette x,y,z zu einer zugehörigen Automatisierungseinheit A,B,C.

Der Schrittkettenkoordinator weist eine Koordinator-Schnittstelle MS auf und die Automatisierungseinheiten A,B,C weisen zur Kommunikation mit dem Schrittkettenkoordinator M jeweils eine Schrittketten-Schnittstelle SS1,SS2,SS3 auf. Über diese Schrittketten-Schnittstellen SS1,SS2,SS3 bzw. über die Koordinator-Schnittstelle MS werden die Synchronisationsinformationen 12 ausgetauscht.

Die Automatisierungseinheiten A,B,C sind dabei derart ausgestaltet, dass das Erreichen eines Ereignispunktes E_{K} in einer Schrittkette x,y,z dem Schrittkettenkoordinator M durch Absenden der Kennung K mitgeteilt wird, wobei der Schrittkettenkoordinator M ausgestaltet ist, anhand der Kennung K die zugehörige Synchronisationsinformation 12 an die Automatisierungseinheiten A,B,C auszugeben.

Die Kennung K kann dabei einen ersten Kenner K1, einen zweiten Kenner K2 und einen dritten Kenner K3 umfassen. Der erste Kenner K1 beschreibt dann die Automatisierungseinheit A oder B oder C. Der zweite Kenner K2 beschreibt dabei die Schrittkette x oder y oder z. Der dritte Kenner K3 beschreibt den erreichten zugehörigen Ereignispunkt E_{K}. Die Kennung K wird dann beispielsweise per Telegramm über den Feldbus zu dem Schrittkettenkoordinator M gesendet.

In dem Schrittkettenkoordinator M wird aufgrund der empfangenen Kennung K mit einem Suchmittel 13 in der Liste 10 die zu der Kennung K zugehörige Synchronisationsinformation 12 gesucht, die gefundene Synchronisationsinformation 12 wird wiederum als ein Telegramm an die Automatisierungseinheiten A,B,C ausgegeben.

Mit der FIG 2 wird ein Ausführungsbeispiel für eine Verknüpfung V zur Synchronisation und Koordination von Schrittketten x,y,z für unterschiedliche Automatisierungseinheiten A,B,C dargestellt. Um einen Projektentwickler 6 (siehe FIG 5) eine Synchronisation/Koordination zwischen Maschinen, insbesondere bei Maschinen welche über OEM Zulieferer zugeliefert wurden, zu erleichtern, kann der Projektentwickler 6 in dem Bearbeitungsmittel 2 Verknüpfungen V zwischen Schrittketten x,y,z erstellen. Die Schrittketten x,y,z mit ihren Schritten Sᵢ und ihren Ereignispunkten E_{K} in Zuordnung zu den jeweiligen Automatisierungseinheiten A,B,C sind gemäß FIG 2 dargestellt. Dem Projektentwickler 6 ist es nun möglich, zwischen der ersten Schrittkette x und der zweiten Schrittkette y eine Verknüpfung V zwischen einem ersten Ereignispunkt E1 der ersten Schrittkette x und einem Start der zweiten Schrittkette y herzustellen. Demnach wird zwischen einem ersten Schritt S1 und einem zweiten Schritt S2 der ersten Schrittkette x ein erster Ereignispunkt E1 mit dem Start der zweiten Schrittkette y verbunden. Ein Projektentwickler 6 kann somit aus einer vorgegebenen Menge 30 von Anwendungsfällen den jeweiligen Verknüpfungen V einen für seinen Prozessablauf notwendigen Anwendungsfall zuordnen. Beispielsweise stehen ihm als Anwendungsfälle folgende Fälle zur Verfügung: Starten 31 einer Schrittkette, verzögertes Starten 32 einer Schrittkette, Warten 33 auf eine Synchronisation, verzögertes Warten 33 auf eine Synchronisation, verzögertes Synchronisieren 34 und Warten 35 auf Beendigung.

Zwischen einem dritten Schritt S3 und einem vierten Schritt S4 der ersten Schrittkette x befindet sich ein zweiter Ereignispunkt E2, welcher mit einem zweiten Ereignispunkt E2 der zweiten Schrittkette y verbunden ist. Der dieser Verbindung zugeordnete Anwendungsfall heißt Warten 33 auf eine Synchronisation. Das bedeutet, wenn die erste Schrittkette x ihren zweiten Ereignispunkt E2 erreicht hat, meldet sie dies an den Schrittkettenkoordinator M. Der Schrittkettenkoordinator M schaut mit seinem Suchmittel 13 in der Liste 10 nach und findet unter der Kennung K = A,x,E2 folgende Synchronisationsinformation: Wenn die zweite Schrittkette y mit der Kennung K = B,y,E2 auch ihren zweiten Ereignispunkt E2 erreicht hat, können die erste Schrittkette x und die zweite Schrittkette y synchron weiterlaufen.

Zwischen einem dritten Schritt S3 und einem vierten Schritt S4 der zweiten Schrittkette y ist eine Verknüpfung V zu einem ersten Ereignispunkt E1 der dritten Schrittkette z angelegt worden. In diesem Fall wird als Anwendungsfall und als Synchronisationsinformation ein verzögertes Synchronisieren 34 hinterlegt. Zwischen einem fünften Schritt S5 und einem sechsten Schritt S6 der ersten Schrittkette x ist ein dritter Ereignispunkt E3, welcher mit einem Ende der zweiten Schrittkette y verbunden ist. Ein Ende einer Schrittkette wird auch als "Job completed" bezeichnet. Das bedeutet, dass wenn die zweite Schrittkette y nach dem vierten Schritt S4 ihr Ende erreicht hat, kann in der ersten Schrittkette x der letzte Schritt S6 ausgeführt werden.

Diese von einem Projektentwickler 6 projektierten Informationen sind in dem Schrittkettenkoordinator M hinterlegt.

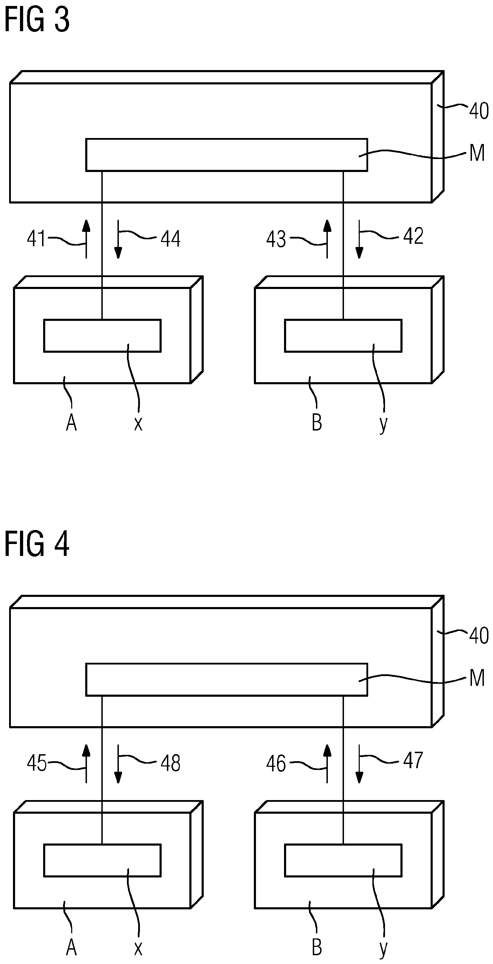

Gemäß FIG 3 ist schematisch ein Kommunikationsdiagramm für den synchronen Start der zweiten Automatisierungseinheit B ausgehend von der ersten Automatisierungseinheit A dargestellt. In der ersten Automatisierungseinheit A läuft die erste Schrittkette x ab und in der zweiten Automatisierungseinheit B läuft die zweite Schrittkette y ab. Hat nun die erste Schrittkette x einen bestimmten Ereignispunkt erreicht, sendet sie eine erste Mitteilung 41 "Start next" an den Schrittkettenkoordinator M ab. Der Schrittkettenkoordinator M sucht die zugehörige Synchronisationsinformation in seiner Liste 10 und sendet daraufhin eine erste Ausgabe 42 "Starte auf Automatisierungseinheit B die Schrittkette y". Ist die zweite Schrittkette y auf der zweiten Automatisierungseinheit B erfolgreich gestartet, so sendet die zweite Automatisierungseinheit B eine zweite Mitteilung 43 "die Schrittkette y auf Automatisierungseinheit B ist angelaufen an den Mediator M". Mit dieser Information der zweiten Mitteilung 43 kann der Schrittkettenkoordinator M wieder in seiner Liste 10 die zugehörige Synchronisationsinformation 12 suchen und sendet daraufhin der ersten Automatisierungseinheit eine zweite Ausgabe 44 "die Synchronisation ist durchgeführt".

Gemäß FIG 4 wird ein Beispiel für ein synchrones Warten aufgezeigt. Die erste Automatisierungseinheit A mit ihrer ersten Schrittkette x sendet an den Schrittkettenkoordinator M eine dritte Mitteilung 45 "Synchronisationspunkt in Schrittkette x für Automatisierungseinheit A erreicht". Da für diesen Anwendungsfall ein synchrones Warten vorgesehen ist, wartet der Schrittkettenkoordinator M auf eine weitere Mitteilung der zweiten Automatisierungseinheit B mit seiner zweiten Schrittkette y. Sendet die zweite Automatisierungseinheit B eine vierte Mitteilung 46 "Synchronisationspunkt in Schrittkette y für Automatisierungseinheit B erreicht" so kann der Schrittkettenkoordinator M auf diese beiden Synchronisationsinformationen bzw. Kennungen K reagieren und sendet nun quasi gleichzeitig eine dritte Ausgabe 47 "Synchronisation für den jeweiligen Ereignispunkt abgeschlossen" an die zweite Automatisierungseinheit B und auch über eine vierte Ausgabe 48 die gleiche Information an die erste Automatisierungseinheit A. Demnach informieren beide Automatisierungseinheiten A,B den Schrittkettenkoordinator über das Erreichen eines Synchronisationspunktes.

In dem vorliegenden Beispiel ist der Schrittgrößenkoordinator beispielsweise als eine Software in einen separaten Koordinationsrechner 40 implementiert.

Mit der FIG 5 wird die Gesamtheit der Anlage dargestellt. Die Automatisierungseinheiten A,B,C steuern den Produktionsprozess 20 und sind zur Synchronisation/Koordination mit den Schrittkettenkoordinator M verbunden. Würde nun ein Projektentwickler 6 eine neue Anlage in Betrieb nehmen wollen und hätte er die Automatisierungseinheiten A,B,C zugeliefert bekommen, so kann er über ein Bearbeitungsmittel 2 sich die einzelnen Schrittketten x,y,z der Automatisierungseinheiten A,B,C ausgeben lassen und in einem Editor Verknüpfungen V mit den zugehörigen Synchronisationsinformationen 12 erstellen. Diese erstellten Verknüpfungen V werden mit einer Kennung K und der dazugehörigen Synchronisationsinformation in den Schrittkettenkoordinator M geladen. Der Projektentwickler 6, kann dabei aus der Menge 30 an Anwendungsfällen wählen, Starten 31 einer Schrittkette, verzögertes Starten 32, Warten 33 auf eine Synchronisation, verzögertes Synchronisieren 34, Warten 35 auf Beendigung.

## Patentansprüche

1. Automatisierungssystem (1) mit mehreren Automatisierungseinheiten (A,B,C) mit jeweils einem Steuerprogramm (A1,B1,C1) einer Mehrzahl von Schrittketten (x,y,z) zur Ablaufsteuerung einer Produktionsanlage (20), wobei die Schrittketten (x,y,z) in den jeweiligen Steuerprogrammen (A1,B1,C1) ablaufen, wobei eine Schrittkette (x,y,z) mehrere Schritte (Sᵢ) und mehrere Ereignispunkte (E_{K}) umfasst,
**gekennzeichnet durch**
einen Schrittkettenkoordinator (M), welcher eine Liste (10) mit mehreren Kennungen (K) aufweist, wobei den Kennungen (K) eine Synchronisationsinformation (12) zugeordnet ist, die Kennung (K) beschreibt dabei eine Identität eines Ereignispunktes (Eₓ) einer Schrittkette (x,y,z) zu einer zugehörigen Automatisierungseinheit (A,B,C), dabei ist der Schrittkettenkoordinator (M) mit einer Koordinator-Schnittstelle (MS) ausgestattet und die Automatisierungseinheiten (A,B,C) umfassen eine Schrittketten-Schnittstelle (SS1,SS2,SS3) über die die Synchronisationsinformation (12) ausgetauscht wird, die Automatisierungseinheiten (A,B,C) sind dabei derart ausgestaltet, dass das Erreichen eines Ereignispunktes (E_{K}) in einer Schrittkette (x,y,z) dem Schrittkettenkoordinator (M) **durch** Absenden der Kennungen (K) mitgeteilt wird, wobei der Schrittkettenkoordinator (M) ausgestaltet ist anhand der Kennungen (K) die zugehörige Synchronisationsinformation (12) an die Automatisierungseinheiten (A,B,C) auszugeben.

2. Automatisierungssystem (1) nach Anspruch 1,
**gekennzeichnet durch** ein Bearbeitungsmittel (2), welches dazu ausgebildet ist die Schrittketten (x,y,z) mit ihren Schritten (Sᵢ) und ihren Ereignispunkten (Eₓ) in Zuordnung zu einer Automatisierungseinheit (A,B,C) darzustellen, weiterhin dazu ausgestaltet einem Projektentwickler (6) es zu ermöglichen zwischen einer ersten Schrittkette (x) und einer zweiten Schrittkette (y) eine Verknüpfung (V) zwischen den Ereignispunkten (E_{K}) zu erstellen, wobei das Bearbeitungsmittel (2) weiterhin ausgestaltet ist es dem Projektentwickler (6) es zu ermöglichen der Verknüpfung (V) die zugehörige Synchronisationsinformation (12) mit der Kennung (K) aus einer vorgegebenen Menge (30) von Anwendungsfällen zuzuordnen, wobei die Menge (30) folgende Fälle umfasst: Starten (31) einer Schrittkette (x,y,z), verzögertes Starten (32) einer Schrittkette (x,y,z), Warten (33) auf eine Synchronisation, verzögertes Synchronisieren (34, Warten (35) auf Beendigung.

3. Automatisierungssystem (1) nach Anspruch 2,
wobei das Bearbeitungsmittel (2) dazu ausgestaltet ist, die Verknüpfung (V) mit der zugehörigen Synchronisationsinformation (12) mit der Kennung (K) in die Liste (10) des Schrittkettenkoordinators (M) zu laden.

4. Automatisierungssystem (1) nach Anspruch 2 oder 3, wobei das Bearbeitungsmittel (2) dazu ausgestaltet ist die Schrittketten (x,y,z) mit ihren Schritten (Sᵢ) und ihren Ereignispunkten (Eₓ) von den Automatisierungseinheit (A,B,C) zu importieren.

5. Verfahren zum Betrieb eines Automatisierungssystems (1) mit mehreren Automatisierungseinheiten (A,B,C) in denen jeweils ein Steuerprogramm (A1,B1,C1) mit zumindest einer Schrittkette (x,y,z) abläuft, welche zur Ablaufsteuerung einer Produktionsanlage (20) schrittweise durchlaufen wird, eine Schrittkette (x,y,z) umfasst dabei mehrere Schritte (Sᵢ) und mehrere Ereignispunkte (Eₓ),
**dadurch gekennzeichnet, dass**
ein Schrittkettenkoordinator (M) verwendet wird, welcher eine Liste (10) mit mehreren Kennungen (K) aufweist, wobei den Kennungen (K) eine Synchronisationsinformation (12) zugeordnet ist, die Kennung (K) beschreibt dabei eine Identität eines Ereignispunktes (E_{K}) einer Schrittkette (x,y,z) zu einer zugehörigen Automatisierungseinheit (A,B,C), dabei ist der Schrittkettenkoordinator (M) mit einer Koordinator-Schnittstelle (MS) ausgestattet, und die Automatisierungseinheiten (A,B,C) umfassen eine Schrittketten-Schnittstelle (SS1,SS2,SS3) über die die Synchronisationsinformation (12) ausgetauscht wird,
die Automatisierungseinheiten (A,B,C) werden dabei derart, betrieben, dass das Erreichen eines Ereignispunktes (E_{K}) in einer Schrittkette (x,y,z) dem Schrittkettenkoordinator (M) durch Absenden der zugehörigen Kennung (K) mitgeteilt wird, wobei in dem Schrittkettenkoordinator (M) anhand der Kennung (K) die zugehörige Synchronisationsinformation (12) gesucht wird, und an die Automatisierungseinheit (A,B,C) ausgeben wird.
